# EUROPÄISCHE PATENTSCHRIFT

(11) **EP 2 912 856 B1**
(45) Veröffentlichungstag und Bekanntmachung des Hinweises auf die Patenterteilung: **27.04.2016**
(21) Anmeldenummer: 14711681.8
(22) Anmeldetag: 06.03.2014
(51) Int. Cl.: H04Q 9/00, G08G 1/01

(54) **SYSTEM UND VERFAHREN ZUR DATENSCHUTZKONFORMEN ERFASSUNG UND WEITERLEITUNG VON TELEMETRIEDATEN**
SYSTEM AND METHOD FOR DATA-PROTECTION-COMPLIANT CAPTURE AND FORWARDING OF TELEMETRY DATA
SYSTÈME ET PROCÉDÉ D'ENREGISTREMENT ET DE TRANSMISSION CONFORMES À LA PROTECTION DES DONNÉES DE DONNÉES DE TÉLÉMÉTRIE

(30) Priorität: 06.03.2013 DE 202013002107 U
(43) Veröffentlichungstag der Anmeldung: 02.09.2015
(73) Patentinhaber: AMV NETWORKS GMBH, 5282 Braunau am Inn - Ranshofen (AT)
(72) Erfinder: WAGNER, Raimund, A-5282 Ranshofen (AT)
(74) Vertreter: Jell, Friedrich
(86) Internationale Anmeldenummer: PCT/EP2014/000565
(87) Internationale Veröffentlichungsnummer: WO 2014/135279

(56) Entgegenhaltungen:
- EP-A1- 2 552 133
- EP-A2- 2 009 610
- WO-A1-03/024132
- US-A1- 2012 123 667

## Beschreibung

Die Erfindung betrifft ein System und Verfahren zur datenschutzkonformen Erfassung und Weiterleitung von Telemetriedaten, bestehend aus Bewegungs- und existierenden Sensordaten in aktuell am Verkehrsgeschehen teilnehmenden Verkehrsmitteln für die Heranziehung zur Erbringung sowohl gemeinnütziger als auch für einzelne Verkehrsteilnehmer individuellen Dienstleistungen, umfassend einer Datenzentrale und jeweils einer Datenerfassungs-/übermittlungseinrichtung in den teilnehmenden Verkehrsmitteln, die über einen drahtlosen Übertragungsweg, bestehend aus existierenden Mobilfunknetzen und einem gesicherten Internetprotokoll, miteinander kommunizieren. Für die unterschiedlichsten verkehrsbezogenen und/oder gemeinnützigen Anwendungsfälle ist es einerseits bereits bekannt, Telemetriedaten aus Verkehrsmitteln zu erfassen, zu übertragen und zu verarbeiten. Auch die Nutzung von drahtlosen Übertragungswegen, wie Mobilfunknetzen oder WLAN sowie durch SSL Verschlüsselung gesicherten Internetprotokollen auf der Basis von TCP/IP und Ethernet, ist bereits allgemeiner Stand der Technik. Ein derartiges System ist aus der Patentschrift EP 2 552 133 A1 bekannt.

Andererseits werden in diesem Anwendungszusammenhang enorme Datenmengen erfasst, die einzelnen Verkehrsteilnehmern und damit einzelnen Personen zugeordnet sind. Ohne einer adäquaten Anonymisierung dieser Datenmassen wird dem Schutz der Persönlichkeitsrechte der Verkehrsteilnehmer gemäß dem Datenschutzgesetz nicht genügend oder gar nicht entsprochen. Vielmehr wird durch die Erfassung und langfristige Speicherung vielfältiger roher Telemetriedaten die Möglichkeit eröffnet und damit Begehrlichkeiten geweckt, diese nicht nur für die ursprünglich gedachten Anwendungsfälle zu verwenden, sondern auch für ursprünglich nicht vorgesehene und möglicherweise nicht vereinbarte Anwendungsfälle zu gebrauchen bzw. zu missbrauchen. Dies liegt in erster Linie daran, dass ein Dienstleister in der Regel die direkte Kontrolle der Datenerfassungs-/übermittlungseinrichtungen in den Verkehrsmitteln und damit der rohen Telemetriedaten besitzt.

Die Aufgabe der vorliegenden Erfindung war es, ein System wie eingangs angegeben mit entsprechender Funktionalität auszustatten, um die Erfassung, Übertragung und Heranziehung von Telemetriedaten aus Verkehrsmitteln sowohl für gemeinnützige als auch für kommerzielle Dienstleistungen zu ermöglichen und dabei gleichzeitig die Persönlichkeitsrechte der Verkehrsteilnehmer gemäß dem geltenden Datenschutzgesetz vollständig zu schützen. Dies wird erreicht, indem den Dienstleistern die Kontrolle der Datenerfassungs-/übermittlungseinrichtungen in den Verkehrsmitteln entzogen wird.

Zur Lösung dieser Aufgabe ist das System erfindungsgemäß dadurch gekennzeichnet, dass sich die Datenzentrale in einer von der Integrationsstelle der Datenerfassungs-/übermittlungseinrichtungen und dem Dienstleister unabhängigen Organisation befindet, alleinige Kontrolle über die erfassten Telemetriedaten aus den Verkehrsmitteln besitzt und ihr die Identität der einzelnen Verkehrsteilnehmer nicht bekannt ist. Damit wird einem Dienstleister die direkte Kontrolle der Datenerfassungs-/übermittlungseinrichtungen und damit die Kontrolle der erfassten rohen Telemetriedaten entzogen.
In der konkreten technischen Umsetzung handelt es sich bei der Datenerfassungs-/übermittlungseinrichtung um eine unter automotiven Gesichtspunkten herstellerübergreifend entwickelte On-Board Einheit zur Nachrüstung in Kraftfahrzeugen. Bestandteile dieser On-Board Einheit sind ein GPS-Modul, ein GSM-Sendemodul, ein verlöteter SIM-Chip als Mobilfunkkennung, eine Recheneinheit mit flüchtigem Kurzzeitspeicher (Arbeitsspeicher/RAM) und nichtflüchtigem Programmspeicher (EEPROM), einem Transceiver Modul für die Anbindung an den Fahrzeugdatenbus, zusätzliche diskrete Eingänge und ein Netzteil. Hervorzuheben ist, dass diese On-Board Einheit produktionsseitig nicht mit einer eindeutigen Identifikation ausgestattet wird. Das erfindungsgemäße System ist aber nicht auf diese Art von On-Board Einheit beschränkt. Als Datenerfassungs-/übermittlungseinrichtungen können auch andere oder bereits werksseitig verbaute Steuergeräte der Verkehrsmittelhersteller verwendet werden. In diesem Fall dient als Integrationsstelle die Datenübergabestelle (Datenschnittstelle) des Verkehrsmittelherstellers, in der eine Zuordnung der herstellerspezifischen Identifikation zur systemspezifischen eindeutigen Identifikation des erfindungsgemäßen Systems hergestellt wird.

Telemetriedaten sind im vorliegenden Fall Rohdaten, die zum einen rein aus einer Baugruppe für ein geographisches Ortungssystem (GPS) stammen (floating car data, FCD). Als Referenzwerte eines Datensatzes dienen dabei der Zeitstempel des Ortungssystems, die Geo-Position (Längen- und Breitengrad) und die eindeutige Identifikation der Datenerfassungs-/übermittlungseinrichtung. Zum anderen kommen noch unterschiedliche Sensordaten der im Verkehrsmittel werksseitig vorhandenen Steuergeräte hinzu (extended floating car data, xFCD), die vom standardisierten Datenbus (z.B. CAN-Bus) an einem bestimmten Anschlussort abgegriffen werden. Art und Umfang dieser zusätzlichen Sensordaten können abhängig vom Modell des Verkehrsmittels mehr oder weniger stark variieren. Ist ein Verkehrsmittel nicht mit eigenen Sensoren oder einem standardisierten Datenbus ausgerüstet, so beschränken sich die Telemetriedaten rein auf die des geographischen Ortungssystems.

Gemäß einer vorteilhaften Ausführung der Erfindung ist vorgesehen, dass in der Datenzentrale sowohl für jede allgemeinnützige als auch für individuelle Dienstleistung die erforderlichen rohen Telemetriedaten zu Datenpaketen zusammenstellt und somit definiert werden, damit einzelne Dienstleister nur die Daten erhalten, die zur Erbringung ihrer jeweiligen Dienstleistung erforderlich sind. Durch diese Maßnahme wird die Nutzbarkeit der an die Dienstleister übertragenen Datenpakete derart eingeschränkt, dass diese ausschließlich für die ursprünglich gedachten und individuell vereinbarten Anwendungsfälle nutzbar sind.

Unter Datenpaketen soll im Rahmen der Erfindung eine Kombination aus ausgewählten Telemetriedaten zusammen mit Referenzdaten verstanden werden. Als Referenzdaten gelten generell immer der Zeitstempel der Datenerhebung eines Datensatzes. Weitere Referenzdaten sind abhängig, ob es sich um Datenpakete handelt, die einem einzelnen Verkehrsmittel (und damit einer Person: dem Halter bzw. Nutzer) nicht zuordenbar oder zuordenbar sind. Als zusätzliche Telemetriedaten gelten FCD oder xFCD, die für einen bestimmten Anwendungsfall erforderlich sind. Für jeden Anwendungsfall gibt es folglich ein genau darauf abgestimmtes Datenpaket - also eine individuelle Zusammenstellung von Referenz- und Nutzdaten. Mit dieser Art der "Filterung" wird dem Datenschutzgrundsatz der Datenminimierung Rechnung getragen.

Die Datenzentrale empfängt die Telemetriedaten, filtert diese im Falle von gewerblichen Dienstleistern anhand von erteilten Genehmigungen für die Datenweitergabe durch Angabe von Genehmigungsschlüsseln, zugeordneten Datenpaketen zu Dienstleistern und im Falle von gemeinnützige Organisationen zusätzlich anhand zugeordneter geografischer Beobachtungszonen. Dabei bedient sich die Datenzentrale eines IT-Systems, bestehend aus Netzwerkinfrastruktur, Anwendungsservern, Datenbanksystemen für die Steuerdaten der Filterung und Datenweitergabe sowie Überwachungssystemen für die Sicherstellung des reibungslosen und unterbrechungsfreien Betriebs des Gesamtsystems.

Vorteilhafterweise ist zusätzlich vorgesehen, dass eine Datenerfassungs-/übermittlungseinrichtung vor Integration in das hier beschriebene System keine hierfür relevante eindeutige Identifikation besitzt, sondern ihr erst bei der Integration in das System eine eindeutige
Identifikation zugeordnet wird, die ausschließlich dem Verkehrsteilnehmer zusammen mit einem Genehmigungsschlüssel für die Inanspruchnahme möglicher individueller Dienstleistungen unter Verwendung einer vor Einsichtnahme geschützten Übergabeform zur Kenntnis gebracht wird. Diese Zuordnung kann sowohl direkt in der Datenerfassungs-/übermittlungseinrichtung als auch an anderer Stelle erfolgen, wodurch in jedem Fall sicherzustellen ist, dass die rohen Telemetriedaten aus den Datenerfassungs-/übermittlungseinrichtungen zusammen mit der eindeutigen Identifikation in der Datenzentrale eingehen. Damit wird die Identifikation einzelner Verkehrsteilnehmer durch Rückverfolgung über Herstellung, Lieferung und dem Verbau der Datenerfassungs-/übermittlungseinrichtungen verhindert.

Bei der eindeutigen Identifikation handelt es sich beispielsweise um eine Ganzzahl, mit der eine Datenerfassungs-/übermittlungseinrichtung eindeutig identifiziert werden kann, sobald sie ihr zugewiesen wurde. Die Vergabe erfolgt nach dem Zufallsprinzip, indem sie nicht bereits werksseitig während der Herstellung der Datenerfassungs-/übermittlungseinrichtung vergeben wird, sondern vor Integration und Inbetriebnahme in einem Verkehrsmittel nur in einer gesicherten Übergabeform vorliegt. Datenerfassungs-/übermittlungseinrichtungen und gesicherte Übergabeformen werden unabhängig voneinander in unterschiedlichen Chargen und Stückelungen produziert und geliefert. Somit ist es unmöglich, vor Integration einer Datenerfassungs-/übermittlungseinrichtung in ein Verkehrsmittel vorherzusagen, welche eindeutige Identifikation einmal in welcher Datenerfassungs-/übermittlungseinrichtung gespeichert sein und in welchem Verkehrsmittel diese installiert wird.

Ein Genehmigungsschlüssel kann in einer konkreten technischen Umsetzung ein beispielsweise 4-stelliger numerischer PIN sein, der nach dem Zufallszahlenprinzip generiert und den eindeutigen Identifikationen in der Übergabeform zugeordnet wird. Diese Zuordnung wird zusätzlich in der Datenzentrale geschützt gespeichert. Der Genehmigungsschlüssel wird für die Autorisierung gewerblicher Dienstleister benötigt, wodurch diese zuordenbare Datenpakete einzelner Verkehrsteilnehmer bei der Datenzentrale abrufen dürfen. Bei Beauftragung eines gewerblichen Dienstleisters durch einen Verkehrsteilnehmer zur Erbringung einer individuellen Dienstleistung erteilt der Verkehrsteilnehmer dem gewerblichen Dienstleister eine Einwilligungserklärung, ihm zuordenbare Datenpakete von der Datenzentrale abzurufen. Dies geschieht durch Bekanntgabe der eindeutigen Identifikation und des zugehörigen Genehmigungsschlüssels. Die eindeutige Identifikation alleine wäre nicht ausreichend, da sich dadurch der gewerbliche Dienstleister durch "erraten" Zugang zu weiteren zuordenbaren Datenpaketen verschaffen könnte, wozu er nicht berechtigt ist. Ein entscheidender Vorteil dabei ist es, dass die Telemetriedaten nicht erst aufwändig anonymisiert werden müssen, da sie von vorne herein systembedingt weitestgehend neutralisiert sind (pseudonymisiert).

Um zu verhindern, dass auch die Integrationsstelle bei der Integration einer bislang unberücksichtigten Datenerfassungs-/übermittlungseinrichtung Kenntnis von der vergebenen eindeutigen Identifikation erlangt, ist gemäß einer weiteren vorteilhaften Ausführungsform der Erfindung vorgesehen, dass der Integrationsstelle von der Datenzentrale eine beliebige nicht sortierte Anzahl an eindeutigen Identifikationen in einer vor Einsichtnahme geschützten Übergabeform übergeben wird, aus der sie für die Integration von Datenerfassungs-/übermittlungseinrichtungen in das System eine beliebige auswählt und diese mittels einer Inbetriebnahmeeinrichtung der Datenerfassungs-/übermittlungseinrichtung unter Verwendung der außen auf der Übergabeform befindlichen verschlüsselten Identifikation zuordnet.

Die Integrationseinrichtung ist ein Werkzeug oder Mittel zur Integration von Datenerfassungs-/übermittlungseinrichtungen in das System. Sie kann im konkreten Fall aus einem Programmieradapter (Hardware) bestehen, der einerseits über eine USB-Schnittstelle mit einem PC verbunden wird und andererseits über z.B. eine 1-wire-Schnittstelle mit der Datenerfassungs-/übermittlungseinrichtung verbunden werden kann. Weiterer Bestandteil ist ein Computerprogramm, das einerseits über den Programmieradapter mit der Datenerfassungs-/übermittlungseinrichtung und andererseits über eine verschlüsselte Internetverbindung (secure socket layer / SSL) mit der Datenzentrale kommunizieren kann. Als Benutzerschnittstelle dient eine grafische Oberfläche. Mit der Integrationseinrichtung wird festgelegt, in welche Art von Verkehrsmittelmodell die Datenerfassungs-/übermittlungseinrichtung integriert und welche eindeutige Identifikation darauf hinterlegt wird. Diese Zuordnung wird schließlich an die Datenzentrale übertragen.

In anderen Ausprägungen der Erfindung kann es sich bei der Integrationseinrichtung um eine Zuordnungsdatenschnittstelle eines Fahrzeugherstellers handeln, wenn vom Fahrzeughersteller werksseitig verbaute Datenerfassungs-/übermittlungseinrichtungen zum Einsatz kommen sollen. Die Zuordnung der Identifikation wird somit vorzugsweise unter Ausnutzung des Zufallsprinzips realisiert, welches vorsieht, dass die Datenerfassungseinrichtungen werksseitig über keinerlei eindeutige Identifikation verfügen und diese getrennt von den Datenerfassungseinrichtungen erzeugt und geliefert werden. In der Integrationsstelle werden für eine Integration eine beliebige Datenerfassungseinrichtung und eine beliebige Übergabeform mit enthaltener eindeutiger Identifikation aus dem Pool im Lager der Integrationsstelle entnommen und verwendet. Die eindeutige Identifikation ist durch die Übergabeform vor Einsicht Unbefugter gesichert.

Ein zusätzlicher Schutz der Persönlichkeitsrechte der Verkehrsteilnehmer gegenüber der gemeinnützigen Dienstleister wird im Rahmen einer erfindungsgemäßen Ausführung des Systems dadurch erreicht, dass aus den empfangenen Telemetriedaten der Verkehrsmittel in der Datenzentrale vor Bereitstellung an gemeinnützige Organisationen die eindeutige Identifikation der einzelnen Datenerfassungs-/übermittlungseinrichtungen durch lediglich eine Streckenidentifikation ersetzt wird, welche sich für jede neue zusammenhängende Wegstrecke ändert. Damit wird der Forderung gemeinnütziger Dienstleistungen nach zusammenhängenden Routeninformationen nachgekommen, ohne durch den Zusammenhang mehrerer Wegstrecken Datenmaterial bereitzustellen, das zur heuristischen Auswertung von Verhaltensweisen und damit in weiterer Folge zur Identifikation von Verkehrsteilnehmern geeignet ist.

Eine Streckenidentifikation kann beispielsweise eine Ganzzahl sein, die einzelnen Telemetriedatensätzen zugegeben wird, die zu einer zusammenhängenden, Bewegung (z.B. Fahrt) eines Verkehrsmittels gehören. Eine solche zusammenhängende Bewegung wird definitionsgemäß mit der Ingangsetzung (z.B. Fahrtbeginn) und dem Abstellen eines Verkehrsmittels begrenzt. Sobald das Verkehrsmittel erneut in Bewegung gesetzt wird (z.B. neue Fahrt), wird eine neue Streckenidentifikation vergeben, sodass kein Zusammenhang mehr zwischen den einzelnen zusammenhängenden Bewegungen eines einzigen Verkehrsmittels besteht.

Datenpakete sind im Rahmen der Erfindung einem einzelnen Verkehrsmittel, (und damit einem einzelnen Verkehrsteilnehmer - dem Halter bzw. Nutzer) nicht zuordenbar, wenn die Referenzdaten eines einzelnen Datensatzes lediglich aus dem Zeitstempel der Datenerhebung bestehen. Bei gemeinnützigen Anwendungsfällen, bei, denen die Telemetriedaten einzelnen Verkehrsteilnehmer nicht zuordenbar sein dürfen, besteht vereinzelt die Anforderung, dass, Datensätze einer zusammenhängenden Bewegung des Verkehrsmittels in Relation zueinander stehen müssen (Verkettung), damit die gemeinnützige Dienstleistung möglich wird. In diesen Fällen wird als zusätzliche Referenz eine sog. Streckenidentifikation (z.B. Fahrten-ID) generiert, die nach Beendigung der Bewegung verfällt und bei erneuter Ingangsetzung des Verkehrsmittels erneuert wird. Dabei wird beispielsweise die neue Streckenidentifikation aus einem Zähler entnommen, der für sämtliche am System teilnehmenden Verkehrsmittel genutzt wird. Somit kann den Anforderungen diesen speziellen Dienstleistungen nachgekommen werden, ohne dass mit diesen Datenpaketen die Erstellung von sog. Bewegungsprofilen ermöglicht wird, wozu die Zuordnung mehrerer zusammenhängender Bewegungen eines bestimmten Verkehrsmittels notwendig wäre. Das Hinzufügen einer Streckenidentifikation als zusätzliche Referenz erfolgt nach Erfordernis.

Vorteilhafterweise können darüber hinaus die erfassten Telemetriedaten der Verkehrsmittel in der Datenzentrale vor Bereitstellung an gemeinnützige Organisationen anhand von durch die Datenzentrale definierten geografischen Beobachtungszonen gefiltert werden, um neben der Anonymität auch die zu übertragenden und damit zu verarbeitenden Datenmengen zu reduzieren.

Geografische Beobachtungszonen können geografische Bereiche sein, die anhand von mehreren Geokoordinaten (Längen- und Breitengrad nach dem World Geodetic System 1984 / WGS84) ein oder mehrere Gebiete beschreiben. Damit wird ein spezieller Filter gesteuert, um gemeinnützigen Organisationen nur nicht-zuordenbare Datenpakete zukommen zu lassen, die für sie auch relevant sind. Da die Datenpakete für diese Art von Dienstleistern nicht einzelnen Verkehrsteilnehmern zuordenbar sein sollen und vornehmlich statistisch ausgewertet werden, sind hier meist nur Daten bestimmter Gebiete gefragt. Um dem Datenschutzprinzip der Datenminimierung nachzukommen, wird dieses Verfahren angewendet. Geografischen Beobachtungszonen bestehen beispielsweise aus einer Reihe von Geokoordinaten (Breiten- & Längengrad), die ein geografisches Gebiet beschreiben. Anhand von trigonometrischen Vergleichsalgorithmen kann ermittelt werden, ob ein Telemetriedatensatz mit seinen Positionsdaten innerhalb oder außerhalb einer solchen Beobachtungszone entstand. Liegt sein Ursprung innerhalb, wird er weitergeleitet. Liegt er außerhalb, kann er beispielsweise verworfen werden.

Da die zu übermittelnden Datenpakete für die Heranziehung bei gewerblichen Dienstleistern mit der eindeutigen Identifikation der Datenerfassungs-/übermittlungseinrichtung versehen sein müssen, werden diese vorteilhafterweise nur bereitgestellt, sofern dem gewerblichen Dienstleister zuvor vom Verkehrsteilnehmer die Einwilligung erteilt wird, welche er gegenüber der Datenzentrale durch Vorlage der eindeutigen Identifikation der Datenerfassungs-/übermittlungseinrichtung und eines Genehmigungsschlüssels nachweist. Damit wird verhindert, dass der Dienstleister beliebig Daten von der Datenzentrale bezieht, ohne dass der betroffene Verkehrsteilnehmer davon Kenntnis erlangt bzw. sich damit einverstanden erklärt.

Größtmögliche Transparenz über die Datenlieferungen erhält der Verkehrsteilnehmer durch die erfindungsgemäße Ausführung des Systems, indem die Datenzentrale einen Web-Server mit grafischer Benutzerschnittstelle bereitstellt, über den ein Verkehrsteilnehmer unter Verwendung eines beliebigen Internetzugangs und durch Autorisierung mit seiner eindeutigen Identifikation und dem zugehörigen Passwort zu jeder Zeit überprüfen kann, welche Datenpakete bestehend aus den Telemetriedaten seines Verkehrsmittels aktuell durch die Datenzentrale bereit gestellt werden und welche Dienstleister diese beziehen. Die Zugangsdaten befinden sich in der vor Einsichtnahme geschützten Übergabeform, welche der Verkehrsteilnehmer bei Integration seiner Datenerfassungs-/übermittlungseinrichtung durch die Integrationsstelle ausgehändigt bekommt. Dies versetzt den Verkehrsteilnehmer in die Lage, die Einhaltung der vertraglichen Vereinbarungen zwischen ihm und den Dienstleistern hinsichtlich des Datenabrufs bei der Datenzentrale zu kontrollieren.

In einer bevorzugten Ausführungsform der Erfindung erhält jeder teilnehmende Verkehrsteilnehmer mittels der gesicherten Übergabeform Zugangsdaten zum Web-Portal der Datenzentrale, ohne, dass die Datenzentrale Kenntnis von der Identität der teilnehmenden Verkehrsteilnehmer erlangen muss. Nach Einloggen in das Web-Portal kann der Verkehrsteilnehmer eine Liste der gewerblichen Dienstleister einsehen, welche zurzeit zuordenbare Datenpakete seines Verkehrsmittels beziehen. Diese Datenabonnements sind mit einer Interventionsfunktion ausgestattet, mit der der Verkehrsteilnehmer im Web-Portal die Datenlieferung einzelner Datenabonnements bis auf weiteres aussetzen kann. Nur er alleine ist in der Lage, später die Datenlieferung wieder zu reaktivieren. Die Sperrungen werden beispielsweise in einer SQL-Datenbank der Datenzentrale hinterlegt und bei der Weiterleitung eingehender Telemetriedaten berücksichtigt.

Die organisatorische Trennung der Einheiten des Systems wird technisch durch mehrere einzelne Maßnahmen umgesetzt. Es wird beispielsweise durch netzwerk- und programmtechnische Vorkehrungen verhindert, dass unbefugten Dienstleistern bzw. -nutzern Telemetriedaten eines Verkehrsteilnehmers ohne dessen Einwilligungserklärung übermittelt werden, die Datenzentrale Kenntnis der Identität des Verkehrsteilnehmers bzw. dessen individuellen Verkehrsmittels erlangt, die Integrationsstellen Kenntnis der eindeutigen Identifikation der Datenerfassungs-/übermittlungseinrichtungen erlangen, oder Fahrzeughersteller, Hersteller von Datenerfassungs-/übermittlungseinrichtungen, Betreiber von Datenübertragungswegen (z.B. Mobilfunkbetreibern) usw. Zugriff auf die erhobenen Telemetriedaten erlangen (z.B. durch Verwendung von Firewalls, verschlüsselten Netzverbindungen, Authentifizierungs- und Autorisierungssystemen). Die Trennung kann auch durch die Nutzung unterschiedlicher Netzwerkinfrastrukturen und Systemkomponenten in allen beteiligten Organisationseinheiten erfolgen, die auch aufgrund der Unkenntnis der Zugangsberechtigungen (Benutzernamen, Passwörter, etc.) zu den jeweils anderen Systemen keinerlei Zugriffsmöglichkeiten haben.

In der folgenden Beschreibung soll die Erfindung anhand eines bevorzugten Ausführungsbeispiels näher erläutert werden, welches auch in den beigefügten Zeichnungen dargestellt ist.

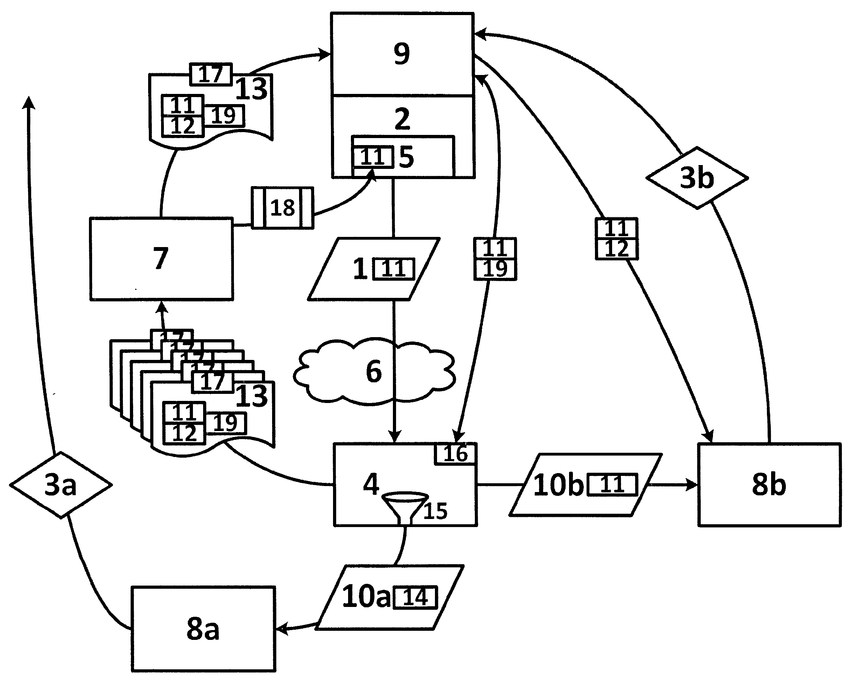

Dabei zeigt Fig. 1 ein erfindungsgemäßes System in schematischer Darstellung.
Fig. 2 beschreibt den Integrationsvorgang von Datenerfassungs-/übermittlungseinrichtungen in Verkehrsmittel und
Fig. 3 zeigt den Genehmigungsvorgang für gewerbliche Dienstleister mit Prüfung durch den Verkehrsteilnehmer.

Das in **Fig. 1** dargestellte System zur automatisierten Erfassung von Telemetriedaten in Verkehrsmitteln umfasst beispielhaft ein mit einer Datenerfassungs-/übermittlungseinrichtung [5] ausgestattetes Verkehrsmittel [2], welches Telemetriedaten [1] über einen drahtlosen Übertragungsweg [6], bestehend aus existierenden Mobilfunknetzen und einem gesicherten Internetprotokoll (vorzugsweise TCP/IP und Ethernet), an eine Datenzentrale [4] überträgt. Die Datenerfassungs-/übermittlungseinrichtung [5] wurde zuvor von einer Integrationsstelle [7] unter Zuhilfenahme einer Integrationseinrichtung [18] durch Zuweisung einer eindeutigen Identifikation [11] im System registriert. Dazu wählt die Integrationsstelle [7] eine beliebige eindeutige Identifikation [11] aus, welche ihr von der Datenzentrale [4] durch mehrere vor Einsichtnahme geschützten Übergabeformen [13] bereitgestellt wurde. Diese Übergabeform [13] enthält eine für die Integrationsstelle [7] nicht sichtbare eindeutige Identifikation [11], sowie einen Genehmigungsschlüssel [12]. Zur Integration ist die verschlüsselte Identifikation [17] außen auf der Übergabeform [13], für die Integrationsstelle [7] sichtbar angebracht. Ein Rückschluss von der verschlüsselten Identifikation [17] auf die eindeutige Identifikation [11] ist ausschließlich in der Datenzentrale [4] möglich. Abschließend wird die Übergabeform [13] an den Verkehrsteilnehmer [9] ausgehändigt, wonach dieser die alleinige Kenntnis seiner zugewiesenen eindeutigen Identifikation [11] besitzt.

Ausgangsseitig an das System angebunden ist zum einen beispielhaft eine gemeinnützige Organisation [8a], welche von der Datenzentrale [4] anhand von geografischen Beobachtungszonen [15] gefilterte, nicht zuordenbare Datenpakete [10a] aus den Telemetriedaten [1] zur Erbringung gemeinnütziger Dienstleistungen [3a] erhält, in denen zuvor die eindeutige Identifikation [11] durch eine Streckenidentifikation [14] ersetzt wurde. Zum anderen ist beispielhaft ein gewerblicher Dienstleister [8b] an das System angebunden, welcher zuordenbare Datenpakete [10b] mit der eindeutigen Identifikation [11] zur Erbringung seiner individuellen Dienstleistung [3b] erhält, deren Empfang er sich zuvor durch den Erhalt der eindeutigen Identifikation [11] zusammen mit einem Genehmigungsschlüssel [12] vom Verkehrsteilnehmer [9] genehmigen ließ. Die Einhaltung dieser Genehmigung kann der Verkehrsteilnehmer [9] über einen Web-Server [16] kontrollieren, der von der Datenzentrale [4] bereitgestellt wird.

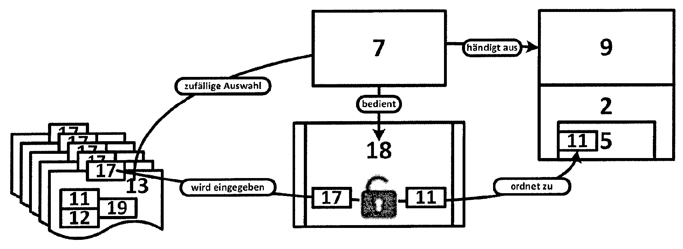

**Fig. 2** zeigt beispielhaft den Integrationsvorgang einer neuen, noch nicht im System registrierten Datenerfassungs-/übermittlungseinrichtung [5] durch die Integrationsstelle [7], indem diese eine beliebige Übergabeform [13] auswählt, auf der außen sichtbar eine verschlüsselte Identifikation [17] angebracht ist. Durch Eingabe der verschlüsselten Identifikation [17] in eine Integrationseinrichtung [18] wird die Identifikation entschlüsselt und für die Integrationsstelle [7] nicht sichtbar der neuen Datenerfassungs-/übermittlungseinrichtung [5] zugeordnet. Abschließend wird die nach wie vor ungeöffnete Übergabeform [13] an den Verkehrsteilnehmer [9] ausgehändigt, wodurch dieser die alleinige Kenntnis seiner zugewiesenen eindeutigen Identifikation [11], des Genehmigungsschlüssels [12] und seines Passworts [19] besitzt.

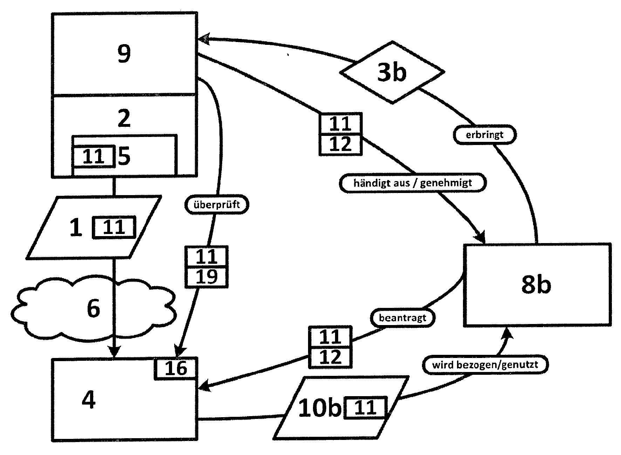

**Fig. 3** zeigt beispielhaft detaillierter, wie der Genehmigungsvorgang eines gewerblichen Dienstleisters [8b] durch den Verkehrsteilnehmer [9] abläuft. Im Rahmen der Beauftragung des gewerblichen Dienstleisters [8b] durch den Verkehrsteilnehmer [9] berechtigt dieser den gewerblichen Dienstleisters [8b] durch Bekanntgabe seiner eindeutigen Identifikation [11] zusammen mit dem Genehmigungsschlüssel [12], Datenpakete [10b], welche Telemetriedaten [1] aus dem Verkehrsmittel [2] des Verkehrsteilnehmers [9] enthalten, von der Datenzentrale [4] zu beziehen. Dies geschieht hier beispielhaft dadurch, dass der gewerbliche Dienstleister [8b] die zuordenbaren Datenpakete [10b] wiederum durch Vorlage der eindeutigen Identifikation [11] zusammen mit dem Genehmigungsschlüssel [12] bei der Datenzentrale [4] beantragt. Durch den darauf folgenden Erhalt der zuordenbaren Datenpakete [10b] zusammen mit der eindeutigen Identifikation [11] wird der gewerbliche Dienstleister [8b] in die Lage versetzt, seine individuelle Dienstleistung [3b] gegenüber dem Verkehrsteilnehmer [9] zu erbringen.

### BEZUGSZEICHENLISTE

1 Telemetriedaten, bestehend aus Bewegungs- und existierenden Sensordaten in aktuell am Verkehrsgeschehen teilnehmenden Verkehrsmitteln [2]
2 Verkehrsmittel, die aktuell am Verkehrsgeschehen teilnehmen
3 Dienstleistung
3a gemeinnützige Dienstleistung
3b individuelle Dienstleistung, für einzelne Verkehrsteilnehmer [9]
4 Datenzentrale
5 Datenerfassungs-/übermittlungseinrichtung, in teilnehmenden Verkehrsmitteln [2]
6 drahtloser Übertragungsweg, bestehend aus existierenden Mobilfunknetzen und einem gesicherten Internet-Protokoll
7 Integrationsstelle (Organisationseinheit, die eine unabhängige Datenerfassungs/- übermittlungseinrichtung [5] in das Netzwerk integriert)
8 Dienstleister
8a gemeinnützige Organisation
8b gewerblicher Dienstleister
9 Verkehrsteilnehmer (gleichzeitig Besitzer des Verkehrsmittels [2])
10 Datenpakete
10a nicht zuordenbare Datenpakete
10b zuordenbare Datenpakete
11 eindeutige Identifikation (in unverschlüsseltem Zustand)
12 Genehmigungsschlüssel
13 Übergabeform, die vor der Einsichtnahme des Inhalts schützt, verschlossen, versiegelt und nur vom Verkehrsteilnehmer [9] zu öffnen ist
14 Streckenidentifikation
15 geografische Beobachtungszonen
16 Web-Server mit grafischer Benutzerschnittstelle
17 verschlüsselte Identifikation (eindeutige Identifikation [11] in verschlüsseltem Zustand)
18 Integrationseinrichtung (Werkzeug oder Mittel zur Integration von Datenerfassungs-/übermittlungseinrichtung [5] in das Netzwerk)
19 Passwort

## Patentansprüche

1. System zur automatisierten Erfassung von Telemetriedaten (1), bestehend aus Bewegungs- und existierenden Sensordaten in wenigstens einem aktuell am Verkehrsgeschehen teilnehmenden Verkehrsmittel (2) zur Erbringung von Dienstleistungen, umfassend:
wenigstens ein Verkehrsmittel (2) mit einer Datenerfassungs-/übermittlungseinrichtung (5), die in dem Verkehrsmittel (2) angeordnet ist;
eine Datenzentrale (4);
ein wenigstens teilweise drahtloses Netzwerk (6) zur Übertragung der Telemetriedaten (1) vom Verkehrsmittel (2) zur Datenzentrale (4); und
einen Dienstleister (8b), der auf Basis an ihn übermittelter Telemetriedaten (10b) eine individuelle Dienstleistung (3b) erbringt;
**dadurch gekennzeichnet, dass**
die Datenzentrale (4) und der Dienstleister (8b) getrennte Organisationseinheiten bilden und eine Datenweitergabe von Telemetriedaten (10b) von der Datenzentrale (4) an den Dienstleister (8b) nur durch Übermittlung eines Genehmigungs-schlüssels (12) vom Verkehrsteilnehmer (9) an den Dienstleister (8b) und vom Dienstleister (8b) an die Datenzentrale (4) stattfindet.

2. System nach Anspruch 1, **dadurch gekennzeichnet, dass** die Datenzentrale (4) derart ausgebildet ist, dass sie einem bestimmten Dienstleister (8b) Datenpakete (10b) einer vorbestimmten Auswahl von Telemetriedaten (1) zur Verfügung stellt, wenn der Genehmigungsschlüssel (12) vom Dienstleister (8b) an die Datenzentrale (4) übermittelt wird.

3. System nach Anspruch 1 oder 2, **dadurch gekennzeichnet, dass** das System umfasst:
einen gemeinnützigen Dienstleister (8a), der auf Basis an ihn übermittelter Telemetriedaten (10a) eine gemeinnützige Dienstleistung (3a) erbringt;
wobeidie Datenzentrale (4) und der gemeinnützige Dienstleister (8a) getrennte Organisationseinheiten bilden und die Datenzentrale (4) Mittel zum Filtern und/oder Anonymisieren der Telemetriedaten (1) zu gefilterten und anonymisierten Daten (10a) zur Weitergabe an den gemeinnützigen Dienstleister (8a) aufweist.

4. System nach Anspruch 3, **dadurch gekennzeichnet, dass** die Mittel zum Filtern und/oder Anonymisieren der Telemetriedaten (1) eine eindeutige Identifikation (11), die die Datenzentrale (4) zusammen mit den Telemetriedaten (1) einer bestimmten Datenerfassungs-/übermittlungseinrichtung (5) erhalten hat, vor Bereitstellung an den gemeinnützigen Dienstleister (8a) durch eine Streckenidentifikation (14) ersetzt, welche sich für jede neue zusammenhängende Wegstrecke ändert.

5. System nach Anspruch 3 oder 4, **dadurch gekennzeichnet, dass** die Mittel zum Filtern und/oder Anonymisieren der Telemetriedaten (1) eine Einrichtung zum Filtern anhand definierter geografischer Beobachtungszonen (15) aufweist.

6. System nach einem der vorhergehenden Ansprüche, **dadurch gekennzeichnet, dass** die Datenerfassungs-/übermittlungseinrichtung (5) derart ausgebildet ist, dass Telemetriedaten (1) von der Datenerfassungs-/übermittlungseinrichtung (5) an die Datenzentrale (4) mit einer eindeutigen Identifikation (11) einer Datenerfassungs- /übermittlungseinrichtung (5) an die Datenzentrale (4) übermittelt werden.

7. System nach einem der vorhergehenden Ansprüche, **dadurch gekennzeichnet, dass** das System eine Integrationsstelle (7) zur Zuordnung einer eindeutigen Identifikation (11) zu einer Datenerfassungs-/übermittlungseinrichtung (5) aufweist.

8. System nach einem der vorhergehenden Ansprüche, **dadurch gekennzeichnet, dass** die Datenzentrale (4) alleinige Kontrolle über die erfassten Telemetriedaten (1) aus den Verkehrsmitteln (2) besitzt und ihr die Identität der einzelnen Verkehrsteilnehmer (9) nicht bekannt ist.

9. System nach einem der vorhergehenden Ansprüche, **dadurch gekennzeichnet, dass** die Datenzentrale (4) für Dienstleister (8a, 8b) die erforderlichen rohen Telemetriedaten (1) zu Datenpaketen (10) zusammenstellt und diese so definiert, dass einzelne Dienstleister (8a, 8b) nur die Daten erhalten, die zur Erbringung ihrer jeweiligen Dienstleistung (3a, 3b) erforderlich sind.

10. System nach einem der vorgehenden Ansprüche, **dadurch gekennzeichnet, dass** das System eine Integrationsstelle (7) aufweist, die eine Einrichtung zum Empfang einer beliebigen nicht sortierten Anzahl an eindeutigen Identifikationen (11) von der Datenzentrale (4) aufweist, die in einer vor Einsichtnahme geschützten Übergabeform (13) übergeben wird, wobei die Integrationsstelle (7) ferner eine Einrichtung für die Integration von Datenerfassungs-/übermittlungseinrichtungen (5) in das System aufweist, die eine beliebige eindeutige Identifikation (11) auswählt und diese mittels einer Integrationseinrichtung (18) der Datenerfassungs-/übermittlungseinrichtung (5) unter Verwendung der außen auf der Übergabeform (13) befindlichen verschlüsselten Identifikation (17) zuordnet und in Betrieb nimmt, ohne dabei von der eindeutigen Identifikation (11) Kenntnis zu erlangen.

11. System nach einem der vorhergehenden Ansprüche, **dadurch gekennzeichnet, dass** die Datenzentrale (4) einen Web-Server (16) mit grafischer Benutzerschnittstelle umfasst, über die ein Verkehrsteilnehmer (9) unter Verwendung eines beliebigen Internetzugangs und durch Autorisierung mit seiner eindeutigen Identifikation (11) und dem zugehörigen Passwort (19) zu jeder Zeit überprüfen kann, welche Datenpakete (10) bestehend aus den Telemetriedaten (1) seines Verkehrsmittels (2) aktuell durch die Datenzentrale (4) bereitgestellt werden und welche Dienstleister (8) diese beziehen.

12. Verfahren zur automatischen Erfassung von Telemetriedaten (1), bestehend aus Bewegungs- und existierenden Sensordaten in wenigstens einem aktuell am Verkehrsgeschehen teilnehmenden Verkehrsmittel (2) zur Erbringung von Dienstleistungen, umfassend die Schritte:
a) Erfassen von Telemetriedaten (1) in dem Verkehrsmittel (2), insbesondere Fahrzeug;
b) Übermittlung der Telemetriedaten (1) durch eine Datenerfassungs-/übermittlungseinrichtung (5) an eine Datenzentrale (4);
c) Übermittlung eines Datenpakets (10b) basierend auf den Telemetriedaten (1) an einen Dienstleister (8b), sofern dieser den Datensatz (10b) mittels eines vom Verkehrsteilnehmer erhaltenen Genehmigungsschlüssels (12) anfordert; und
d) Erbringung einer individuellen Dienstleistung (3b) durch den Dienstleister (8b) an den Verkehrsteilnehmer (9).

13. Verfahren nach Anspruch 12, **dadurch gekennzeichnet, dass** die Telemetriedaten (1) im Verfahrensschritt b) mit einer eindeutigen Identifikation (11) der Datenerfassungs-/übermittlungseinrichtung (5) übermittelt werden.

14. Verfahren nach einem der vorhergehenden Ansprüche 12 oder 13, **dadurch gekennzeichnet, dass** der Verkehrsteilnehmer eine individuelle Dienstleistung (3b) durch Übermittlung eines Genehmigungsschlüssels (12), insbesondere in Verbindung mit einer eindeutigen Identifikation (11), an den Dienstleister (8b) anfordert.

15. Verfahren nach einem der Ansprüche 12, 13 oder 14 umfassend die Schritte:
c) Filtern und/oder Anonymisieren der Telemetriedaten (1) zur Erzeugung gefilterter und/oder anonymisierter Daten (10a) zur Weitergabe an einen gemeinnützigen Dienstleister (8a);
d) Übermittlung der gefilterten und/oder anonymisierten Daten (10a) basierend auf den Telemetriedaten (1) an den gemeinnützigen Dienstleister (8a); und
e) Erbringung einer gemeinnützigen Dienstleistung (3a) durch den gemeinnützigen Dienstleister (8a).

16. Verfahren nach Anspruch 15, **dadurch gekennzeichnet, dass** die gefilterten und/oder anonymisierten Daten (10a) mit einer Streckenidentifikation (14) an den gemeinnützigen Dienstleister (8a) übermittelt werden.

17. Verfahren nach einem der Ansprüche 12 bis 14, **dadurch gekennzeichnet, dass** einer Datenerfassungs-/übermittlungseinrichtung (5) bei der Integration in ein System zur Durchführung des Verfahrens eine eindeutige Identifikation (11), die ausschließlich dem Verkehrsteilnehmer (9) bekannt ist, dem die Datenerfassungs-/übermittlungseinrichtung (5) zugeordnet ist, und ein Genehmigungsschlüssel (12) für die Inanspruchnahme von individuellen Dienstleistungen (3b) zugeordnet wird, wobei wenigstens die Zuordnung der Identifikation (11) unter Verwendung einer vor Einsichtnahme geschützten Übergabeform (13) erfolgt, welche verschlossen, versiegelt und nur vom Verkehrsteilnehmer (9) zu öffnen ist.

## Claims

1. System for the automated capture of telemetry data (1) consisting of movement data and existing sensor data in at least one transport means (2) currently participating in the traffic situation for the provision of services, comprising:
at least one transport means (2) with a data capture/communication device (5), which is disposed in the transport means (2);
a data center (4);
an at least partly wireless network (6) for the transfer of the telemetry data (1) from the transport means (2) to the data center (4); and
a service provider (8b), which furnishes a individual service (3b) on the basis of the telemetry data (10b) communicated to it;
**characterized in that**
the data center (4) and the service provider (8b) constitute separate organization units and a data forwarding of telemetry data (10b) from the data center (4) to the service provider (8b) takes place only by communication of a permission key (12) from the road user (9) to the service provider (8b) and from the service provider (8b) to the data center (4).

2. System according to claim 1, **characterized in that** the data center (4) is designed in such a way that it makes data packets (10b) of a predetermined selection of telemetry data (1) available to a particular service provider (8b) when the permission key (12) is communicated by the service provider (8b) to the data center (4).

3. System according to claim 1 or 2, **characterized in that** a service provider for the public benefit (8a), which furnishes a service (3a) for the public benefit on the basis of the telemetry data (10a) communicated to it wherein
the data center (4) and the service provider (8a) for the public benefit constitute separate organization units and the data center (4) is provided with means for the filtering and/or anonymizing of the telemetry data (1) in the form of filtered and anonymized data (10a) for the forwarding to the service provider (8a) for the public benefit.

4. System according to claim 3, **characterized in that** the means for the filtering and/or anonymizing of the telemetry data (1) replaces a unique identification (11) that the data center (4) has received together with the telemetry data (1) of a particular data capture/communication device (5) by a stretch identification (14), which is changed for each new coherent path stretch, before provision to the service provider (8a) for the public benefit.

5. System according to claim 3 or 4, **characterized in that** the means for the filtering and/or anonymizing of the telemetry data (1) is provided with a device for the filtering on the basis of defined geographic observation zones (15).

6. System according to one of the preceding claims, **characterized in that** the data capture/communication device (5) is designed in such a way that telemetry data (1) from the data capture/communication device (5) to the data center (4) are communicated with a unique identification (11) of a data capture/communication device (5) to the data center (4).

7. System according to one of the preceding claims, **characterized in that** the system is provided with a point of integration (7) for the correlation of a unique identification (11) with a data capture/communication device (5).

8. System according to one of the preceding claims, **characterized in that** the data center (4) has sole control over the captured telemetry data (1) from the transport means (2) and the identity of the individual road users (9) is not known to it.

9. System according to one of the preceding claims, **characterized in that** the data center (4) assembles the raw telemetry data (1) necessary for service providers (8a, 8b) as data packets (10) and defines these in such a way that individual service providers (8a, 8b) obtain only the data that are necessary for the furnishing of their respective service (3a, 3b).

10. System according to one of the preceding claims, **characterized in that** the system is provided with a point of integration (7), which is provided with a device for the reception of an arbitrary unsorted number of unique identifications (11) from the data center (4), which is transferred in a transfer form (13) protected from view, wherein the point of integration (7) is further provided with a device for the integration of data capture/communication devices (5) into the system, which selects an arbitrary unique identification (11) and correlates it and places it in operation by means of an integration device (18) of the data capture/communication device (5) by use of the encrypted identification (17) located on the outside of the transfer form (13), without gaining knowledge of the unique identification (11) while doing so.

11. System according to one of the preceding claims, **characterized in that** the data center (4) comprises a web server (16) with graphical user interface, via which a road user (9) is able to check at any time by use of an arbitrary Internet access and by authorization with his or her unique identification (11) and the associated password (19) which data packets (10) consisting of the telemetry data (1) of his or her transport means (2) are currently being provided by the data center (4) and which service providers (8) are retrieving them.

12. Method for the automated capture of telemetry data (1) consisting of movement data and existing sensor data in at least one transport means (2) participating in the current traffic situation for the provision of services, comprising the steps:
a) Capture of telemetry data (1) in a transport means (2), more particularly in a vehicle (2);
b) Communication of the telemetry data (1) by a data capture/communication device (5) to a data center (4);
c) Communication of a data packet (10b) based on the telemetry data (1) to a service provider (8b), when this requests the data record (10b) by means of a permission key (12) obtained from the road user; and
d) Furnishing of an individual service (3b) by the service provider (8b) to the road user (9).

13. Method according to claim 12, **characterized in that** the telemetry data (1) are communicated in the method step b) with a unique identification (11) of the data capture/communication device (5).

14. Method according to one of the preceding claims 12 or 13, **characterized in that** the road user requests a individual service (3b) by communication of a permission key (12), especially in conjunction with a unit identification (11), to the service provider (8b).

15. Method according to claim 12, 13 or 14 comprising the steps:
c) Filtering and/or anonymizing of the telemetry data (1) for the generation of filtered and/or anonymized data (10a) for the forwarding to the service provider for the public benefit (8a);
d) Communication of the filtered and/or anonymized data (10a) based on the telemetry data (1) to a service provider for the public benefit (8a); and
e) Furnishing of a service (3a) for the public benefit by the service provider for the public benefit (8a).

16. Method according to claim 15, **characterized in that** the filtered and/or anonymized data (10a) are communicated with a stretch identification (14) to the service provider for the public benefit (8a).

17. Method according to one of claims 12 to 14, **characterized in that**, during integration into a system for the implementation of the method, there is correlated, with a data capture/communication device (5), a unique identification (11), which is known exclusively to the road user (9) with whom the data capture/communication device (5) is correlated, and a permission key (12) for the demand for individual services (3b) is correlated, wherein at least the correlation of the identification (11) takes place by use of a transfer form (13), which is protected from view, closed, sealed and to be opened only by the road user (9).

## Revendications

1. Système pour l'acquisition automatisée de données de télémétrie (1), composées de données de mouvement et de données de capteurs existantes, dans au moins un moyen de transport (2) participant actuellement à la circulation en vue de la prestation de services, comprenant :
au moins un moyen de transport (2) avec un dispositif d'acquisition et de transmission de données (5) qui est disposé dans le moyen de transport (2) ;
une centrale de données (4) ;
un réseau (6) au moins partiellement sans fil pour la transmission de données de télémétrie (1) du moyen de transport (2) à la centrale de données (4) ; et
un prestataire de services (8b) qui exécute une prestation de services individuelle (3b) sur la base des données de télémétrie qui lui sont transmises (10b) ; **caractérisé en ce que** la centrale de données (4) et le prestataire de services (8b) forment des unités organisationnelles séparées et la transmission de données de télémétrie (10b) de la centrale de données (4) au prestataire de services (8b) n'a lieu que par la transmission d'une clé d'autorisation (12) du participant à la circulation (9) au prestataire de services (8b) et du prestataire de services (8b) à la centrale de données (4).

2. Système selon la revendication 1, **caractérisé en ce que** la centrale de données (4) est conformée de manière à fournir à un certain prestataire de services (8b) des paquets de données (10b) formés d'une sélection prédéterminée de données de télémétrie (1) quand la clé d'autorisation (12) est transmise à la centrale de données (4) par le prestataire de services (8b).

3. Système selon la revendication 1 ou 2, **caractérisé en ce que** le système comprend :
un prestataire de services d'utilité publique (8a) qui réalise une prestation de services d'utilité publique (3a) sur la base des données de télémétrie qui lui sont transmises (10a),
la centrale de données (4) et le prestataire de services d'utilité publique (8a) étant des unités organisationnelles séparées et la centrale de données (4) comprenant des moyens pour filtrer et/ou anonymiser les données de télémétrie (1) afin d'obtenir des données filtrées ou anonymisées (10a) à transmettre au prestataire de services d'utilité publique (8a).

4. Système selon la revendication 3, **caractérisé en ce que** le moyen pour filtrer et/ou anonymiser les données de télémétrie (1), avant la fourniture au prestataire de services d'utilité publique (8a), remplace une identification univoque (11) que la centrale de données (4) a reçue avec les données de télémétrie (1) d'un certain dispositif d'acquisition et de transmission de données (5) par une identification d'itinéraire (14) qui change avec chaque nouvel itinéraire cohérent.

5. Système selon la revendication 3 ou 4, **caractérisé en ce que** le moyen pour filtrer et/ou anonymiser les données de télémétrie (1) comprend un dispositif pour réaliser un filtrage à l'aide de zones d'observation géographiques (15) données.

6. Système selon l'une des revendications précédentes, **caractérisé en ce que** le dispositif d'acquisition et de transmission de données (5) est conformé de telle sorte que des données de télémétrie (1) soient transmises par le dispositif d'acquisition et de transmission de données (5) à la centrale de données (4) avec une identification univoque (11) d'un dispositif d'acquisition et de transmission de données (5) à la centrale de données (4).

7. Système selon l'une des revendications précédentes, **caractérisé en ce que** le système comprend une station d'intégration (7) pour attribuer une identification univoque (11) à un dispositif d'acquisition et de transmission de données (5).

8. Système selon l'une des revendications précédentes, **caractérisé en ce que** la centrale de données (4) possède seule le contrôle des données de télémétrie (1) acquises à partir des moyens de transport (2) et ne connaît pas l'identité des différents participants à la circulation (9).

9. Système selon l'une des revendications précédentes, **caractérisé en ce que** la centrale de données (4) regroupe les données de télémétrie (1) brutes nécessaires en paquets de données (10) destinés aux prestataires de services (8a, 8b) et définit ceux-ci de telle manière que chaque prestataire de services (8a, 8b) ne reçoive que les données nécessaires à sa prestation de services (3a, 3b) respective.

10. Système selon l'une des revendications précédentes, **caractérisé en ce que** le système comprend une station d'intégration (7) comprenant un dispositif pour recevoir un nombre quelconque d'identifications univoques (11) non triées de la centrale de données (4), qui sont transmises sous une forme de transmission (13) empêchant leur consultation, la station d'intégration (7) comprenant en outre un dispositif pour l'intégration dans le système de dispositifs d'acquisition et de transmission de données (5), qui sélectionne une identification univoque (11) quelconque et l'attribue à un dispositif d'acquisition et de transmission de données (5) au moyen d'un dispositif d'intégration (18) en utilisant l'identification codée (17) qui se trouve à l'extérieur sur la forme de transmission (13) et met celui-ci en service sans prendre connaissance de l'identification univoque (11).

11. Système selon l'une des revendications précédentes, **caractérisé en ce que** la centrale de données (4) comprend un serveur Web (16) avec une interface utilisateur graphique par laquelle un participant à la circulation (9) peut, en utilisant un accès à Internet quelconque et en étant autorise par son identification univoque (11) et le mot de passe (19) correspondant, vérifier à tout moment quels paquets de données (10) composés des données de télémétrie (1) de son moyen de transport (2) sont actuellement fournis par la centrale de données (4) et quels prestataires de services (8) se procurent ceux-ci.

12. Procédé pour l'acquisition automatique de données de télémétrie (1) données de mouvement et de données de capteurs existantes, dans au moins un moyen de transport (2) participant actuellement à la circulation en vue de la prestation de services, comprenant les étapes suivantes :
a) acquisition de données de télémétrie (1) dans le moyen de transport (2), en particulier un véhicule ;
b) transmission des données de télémétrie (1) par un dispositif d'acquisition et de transmission de données (5) à une centrale de données (4) ;
c) transmission d'un paquet de données (10b) basé sur les données de télémétrie (1) à un prestataire de services (8b), si celui-ci demande l'ensemble de données (10b) au moyen de la clé d'autorisation (12) reçue du participant à la circulation ;
d) prestation d'un service individuel (3b) par le prestataire de services (8b) pour le participant à la circulation (9).

13. Procédé selon la revendication 12, **caractérisé en ce que** dans l'étape b) du procédé, les données de télémétrie (1) sont transmises avec une identification univoque (11) du dispositif d'acquisition et de transmission de données (5).

14. Procédé selon l'une des revendications 12 ou 13, **caractérisé en ce que** le participant à la circulation demande une prestation de services individuelle (3b) en transmettant une clé d'autorisation (12), en particulier associée à une identification univoque (11), au prestataire de services (8b).

15. Procédé selon l'une des revendications 12, 13 ou 14 comprenant les étapes suivantes :
c) filtrage et/ou anonymisation des données de télémétrie (1) pour produire des données filtrées et/ou anonymisées (10a) à transmettre à un prestataire de services d'utilité publique (8a) ;
d) transmission des données filtrées et/ou anonymisées (10a) au prestataire de services d'utilité publique (8a) sur la base des données de télémétrie (1) ; et
e) exécution d'une prestation de services d'utilité publique (3a) par le prestataire de services (8a) d'utilité publique.

16. Procédé selon la revendication 15, **caractérisé en ce que** les données filtrées et/ou anonymisées (10a) sont transmises au prestataire de services d'utilité publique (8a) avec une identification d'itinéraire (14).

17. Procédé selon l'une des revendications 12 à 14, **caractérisé en ce qu'**un dispositif d'acquisition et de transmission de données (5) est associé, lors de l'intégration dans un système pour la mise en oeuvre du procédé, à une identification univoque (11) qui est connue exclusivement du participant à la circulation (9) auquel le dispositif d'acquisition et de transmission de données (5) est associé et une clé d'autorisation (12) pour la demande de prestation de services individuelles (3b), l'association de l'identification (11), au minimum, ayant lieu en utilisant une forme de transmission (13) empêchant sa consultation, qui est fermée, scellée et ne doit être ouverte que par le participant à la circulation (9).
